# EUROPÄISCHE PATENTSCHRIFT

(11) **EP 0 812 131 B1**
(45) Veröffentlichungstag und Bekanntmachung des Hinweises auf die Patenterteilung: **05.01.2000**
(21) Anmeldenummer: 96902201.1
(22) Anmeldetag: 22.02.1996
(51) Int. Cl.: A21D 13/00, A21D 13/08, A21D 10/02

(54) **GEROLLTES ROULADENBISCUIT**
BISCUIT ROLL
BISCUIT ROULE

(30) Priorität: 28.02.1995 EP 95102840
(43) Veröffentlichungstag der Anmeldung: 17.12.1997
(73) Patentinhaber: SOCIETE DES PRODUITS NESTLE S.A., 1800 Vevey (CH)
(72) Erfinder: HAURI, Jürg, CH-4132 Muttenz (CH)
(74) Vertreter: Thomas, Alain
(86) Internationale Anmeldenummer: CH9600056
(87) Internationale Veröffentlichungsnummer: WO9626644

(56) Entgegenhaltungen:
- EP-A- 0 158 590
- FR-A- 2 643 546
- US-A- 3 934 040
- US-A- 4 664 932
- ED: J. ILLSLEY: "Good Housekeeping New Step-by-step cook book." , EBURY PRESS , LONDON, UK. XP002003639 siehe Seite 394, Spalte 2, Zeile 14 - Seite 395, Zeile 9

## Beschreibung

Die Erfindung betrifft ein gerolltes Rouladenbiscuit, hergestellt auf Basis einer Mischung von Mehl, Zucker, Vollei, Backpulver, Emulgator und Wasser.

Heutzutage existieren auf dem Markt gefüllte Rauladenbiscuits, die als fertige Roulade dem Konsument angeboten werden. Es wäre für den Konsumenten sehr attraktiv, ein ungefülltes Rouladenbiscuit angeboten zu bekommen. Er könnte dann seine eigene Füllung aus frischen (nicht lange haltbaren) Zutaten herstellen. Im Haushalt ist es sehr schwierig, ein Biscuit und erst recht aufrollbares Rouladenbiscuit herzustellen. Einfach ist es dagegen, eine hervorragend schmeckende, leicht wirkende Rouladenfüllung auf Schlagrahm-, Quark- oder Joghurtbasis zu kreieren. Mit wenig Aufwand könnte dem Gast unter Verwendung eines industriell gefertigten Biscuits ein selbstgemachtes Dessert offeriert werden, das gekaufte Artikel qualitativ übertrifft, weil es so leichtverderbliche Zutaten wie frische Früchte und Schlagrahm enthalten kann.

Der Erfindung liegt deshalb die Aufgabe zugrunde, ein solches Biscuit herzustellen und aufgerollt zu vertreiben, das ohne Risse und Brüche abgerollt und gefüllt wieder aufgerollt werden kann. Es ist effektiv absolut notwendig, dass sich das Biscuit beim Füllen in der Küche einwandfrei abrollen und aufrollen lässt.

Die Erfindung betrifft ein gerolltes Rouladenbiscuit, hergestellt auf Basis einer Mischung von Mehl, Zucker, Vollei, Backpulver, Emulgator und Wasser und wobei man im Teig zur Herstellung des Biscuits Cystein und Eiereiweiss zugesetzt werden. Das Rouladenbiscuit soll auch nach einer Lagerung bis zu 4 Wochen wieder rissfrei entrollt werden können. Man hat ein gerolltes Biscuit zur Verfügung, das auch sehr lange nach dem Backen abgerollt und aufgerollt werden kann.

Es ist aber kritisch, dass das Rouladenbiscuit in einer gerollten Form zur Verfügung steht. Einerseits lässt sich das Biscuit nach mehreren Wochen in ungerolltem Zustand nicht mehr zu einer Roulade aufrollen ohne dass es bricht. Nach mehrtägiger Lagerung ist es nur möglich, das Biscuit nach dem Füllen wieder aufzurollen, wenn es in gerolltem Zustand gelagert wurde. Wird anderseits das Biscuit nicht gerollt angeboten, führt das zu relativ unhandlichen Format.

Als Cystein verwendet man vorzugsweise L-Cystein. Im Handel wird L-Cystein vor allem als L-Cystein-Hydrochlorid-Monohydrat angeboten. Die Wirkung ist dieselbe. Man arbeitet mit einer Menge zwischen 0,01 und 0,03% L-Cystein (entsprechend 0,015 bis 0,040% Cystein-HCl-Monohydrat). Eine weitere Erhöhung des Gehaltes beeinträchtigt das Produkt geschmacklich, ohne das Brechen weiter zu verringern. In der Beschreibung sind alle Prozente auf Gewicht und die Mengen sind auf das fertige Rouladenbiscuit bezogen.

Die Vorbereitung des Teiges geschieht mit irgendwelchem Mehl, z.B. Biscuitmehl. Vorzugsweise arbeitet man mit Weissmehl, das einen stärkeren Klebereffekt bringt. Im Mehl kann auch Ascorbinsäure vorhanden sein oder zugegeben werden: Eine Menge zwischen 0,003 und 0,02% ist besonders günstig. Für ein wenig brüchiges Biscuit liegt die Menge von Mehl zwischen 28 und 35%. Der Wasser Gehalt des fertigen Produktes liegt zwischen 22 und 28%.

Bei der Vorbereitung des Teiges verwendet man Vollei in einer Menge von ca. 24% (basiert auf dem Gehalt als frisches Ei). Auf dem Endprodukt, hat man eine Menge Vollei von ca. 27%. Man hat festgestellt, das eine Zugabe von Eiereiweiss einen positiven Effekt auf das Brechen beim Abrollen und Aufrollen des Rouladenbiscuits mit sich bringt. Die optimale Menge liegt zwischen 0,5 und 1,7% (auf trockener Basis): Man kann sowohl Eiereiweiss in Pulverform oder in frischer, pasteurisierter oder sterilisierter Form gebrauchen. Die optimale Menge von Eiereiweiss liegt bei 1,1% (in getrocknete Form). Das Eiereiweiss macht das Biscuit auch weniger klebrig.

Die Zugabe eines Verdickungsmittels reduziert die Brüche des Biscuits beim Abrollen ebenfalls. Als Verdickungsmittel verwendet man vorzugsweise Xanthan. Die Menge des Verdickungsmittels liegt zwischen 0,05 und 0,17%. Bei mehr als 0,17% ist der Verdickende Effekt von Xanthan bereits störend.

Als Backpulver können alle üblichen Backpulver verwendet werden. Vorzugsweise wird die handelsübliche Backpulverqualität verwendet (Mischung aus Natriumbicarbonat, saurem Natriumpyrophosphat und Weizenstärke). Die Menge liegt zwischen 0,2 und 0,6 %. Als Emulgator können die üblichen Aufschlagemulgatoren verwendet werden: Zum Beispiel destillierte Monoglyceride kombiniert mit Propylenglykol.

Das Rouladenbiscuit kann zusätzlich Salz, Kakao, Milchpulver, Maisstärke, Sojamehl, Konservierungsmittel, wie Alkohol, Propionsäure und/oder Sorbinsäure und/oder deren Salze, geringe Mengen Fett und/oder Oel und Aromen, wie Zitronenöl, sowie weitere geeignete Zutaten enthalten.

Die Konservierung erfolgt durch Zugabe von Aethyl Alkohol auf das fertige Rouladenbiscuit: Diese Zugabe liegt zwischen 0,4 und 2%.

Damit es problemlos wieder entrollt werden kann, wird das Rouladenbiscuit zusammen mit einem Trennpapier oder einer Trennfolie zu einem Zylinder aufgerollt. Als Trennpapier oder Trennfolie kommt vorzugsweise ein Papier in Frage, das zweiseitig mit einer Trennsubstanz beschichtet ist. Als Trennsubstanz eignet sich ein für den direkten Kontakt mit Lebensmitteln zulässiges Silikon (unter dem Namen Backpapier bekannt). Dieses Papier hat den Vorteil, dass es von allen Papieren und Folien am wenigsten klebt. Man legt einen Trennpapierzuschnitt von passender Grösse auf das gebackene, ausgekühlte und geschnittene Biscuit und rollt ihn zusammen mit dem Biscuit auf.

Um auf den Markt zu kommen, muss das Rouladenbiscuit in einer Hülle, die z.B. aus Kunststoff oder beschichtetem Karton besteht, luft- und wasserdampfdicht verpackt werden. Gegebenenfalls wird die Luft innerhalb dieser Hülle durch ein Inertgas, wie Stickstoff und/oder Kohlendioxid, ersetzt. Liegt die Biscuitrolle während der Lagerung auf einer stützenden, halbzylinderförmigen Auflage, entstehen beim Abrollen weniger Risse, als wenn die Unterlage eben ist. Diese Einlage besteht vorzugsweise aus beschichtetem Karton.

Die Grösse des ungerollten Biscuits für Rouladen ist nicht kritisch. Als Beispiel kann man Längen Zwischen 30 und 60 cm und Breiten zwischen 10 und 30 cm erwähnen: Die Aufrollung geschieht vorzugsweise in Längsrichtung. Für Grosskonsumenten sind wesentlich grössere Formate denkbar. Das Gewicht des ungefüllten Rouladenbiscuit liegt für Kleinkonsumenten vorzugsweise zwischen 100 und 300 g.

Das ungerollte Biscuit hat eine Dicke zwischen 5 und 15 mm, damit das Aufrollen bis zum Ende problemlos geschieht.

Wie schon obenerwähnt, kann von Konsumenten irgendwelche Füllung auf das Biscuit gebracht werden: z.B. auf Basis von Rahm, Quark, Joghurt, Früchte, Schokolade.

Bei der Biscuitherstellung wird die Mischung der eingangs erwähnten Ingredienzien durchgeführt, dann die Mischung aufgeschlagen und vorzugsweise auf einem durchlaufenden Band verteilt, kontinuierlich gebacken, gekühlt, geschnitten, gerollt und verpackt. Selbst-verständlich ist auch eine diskontinuierliche Herstellung möglich.

Die Erfindung betrifft auch ein gerolltes Rouladenbiscuit, hergestellt auf Basis einer Mischung von Mehl, Zucker, Vollei, Backpulver, Emulgator, Wasser und Verdickungsmittel. Als Verdickungsmittels verwendet man Xanthan in einer Menge zwischen 0,05 und 0,17%.

Die Erfindung betrifft weiter der Teig, der für das obenerwähnten Rouladenbiscuit verwendet wird. Dieser Teig enthält Mehl, Zucker, Vollei, Backpulver, Emulgator, Wasser sowie L-Cystein und Eiereiweiss. Alle diese Ingredienzien sind die Gleichen wie diese die schon oben beschrieben worden sind.

Der Teig enthält zwischen 0,01 und 0,04% L-Cystein, zwischen 0,5 und 1,7% Eiereiweiss (auf trockener Basis), zwischen 15 und 25% Wasser (in Form von Eiern zugegeben) und zwischen 22 und 30% Weissmehl. Dieser Teig enthält zusätzlich zwischen 0,04 und 0,15% Xanthan. Für den Teig, sind die Mengen nicht auf dem fertigen Produkt bezogen.

Die Zugabe von Eiereiweiss wurde gemäss folgender Methode festgestellt:

Elektrophorese SDS-PAGE (System nach Lämmli) der Proteine durch Vergleich des Eierproteinverhältnisses im erfindungsgemässen Rouladenbiscuit mit einer Standardroulade auf Basis von Vollei wurde eine Anreicherung an Eiereiweiss gefunden, d.h. im erfindungsgemässen Rouladenbiscuit war das Verhältnis Ovalbumin zu Eigelbprotein erhöht.

Die Bestimmung des Xanthans wurden folgendermassen durchgeführt:

Hydrolyse der Polysaccharide des Rouladenbiscuits mit Schwefelsäure. Trennung und Bestimmung der Zuckerbausteine mit HPAE (Hochleistungsanionenaustauschchromatographie). Bestimmung der Xanthanmenge durch Auswertung der charakteristischen Zuckerbausteine Glucuronsäure und Mannose.

Nachfolgend wird ein Ausführungsbeispiel der Erfindung anhand vereinfachten Zeichnungen beschrieben.

### Es zeigt:

Fig. 1 ein Ausführungsform des erfindungsgemässen Rouladenbiscuits in perspektiver Darstellung in ungerolltem Zustand,
Fig. 2 das gerollte Rouladenbiscuit ebenfalls in perspektiver Darstellung,
Fig. 3 und 4 die Einlage für das Rouladenbiscuit, in perspektiver Dartstellung und
Fig. 5 das verpackte Fertigprodukt in perspektiver Darstellung.

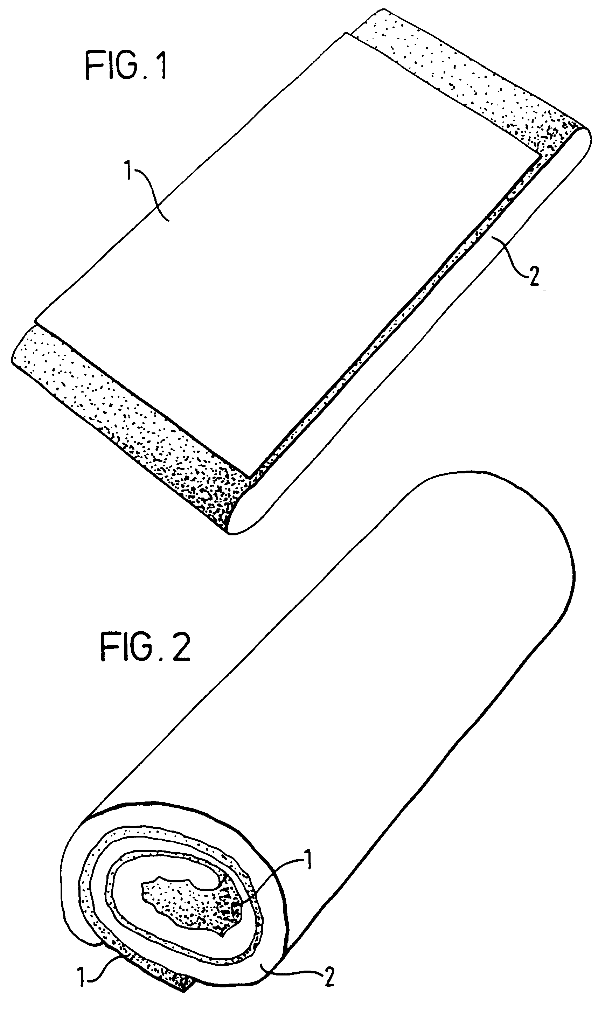

Fig. 1 verdeutlicht das ungerollte Rouladenbiscuit (2) in Form eines Rechtecks mit aufgelegtem Trennpapier (1). Die Grösse des Trennpapiers ist so gewählt dass es nicht ganz die Fläche des Biscuits deckt. Auf Fig. 2 sieht man das gerollte Biscuit (2), wobei das Trennpapier (1) die Aussenseite des Biscuits nicht deckt: nur auf einem Teil der Aussenseite geht das Trennpapier hinaus.

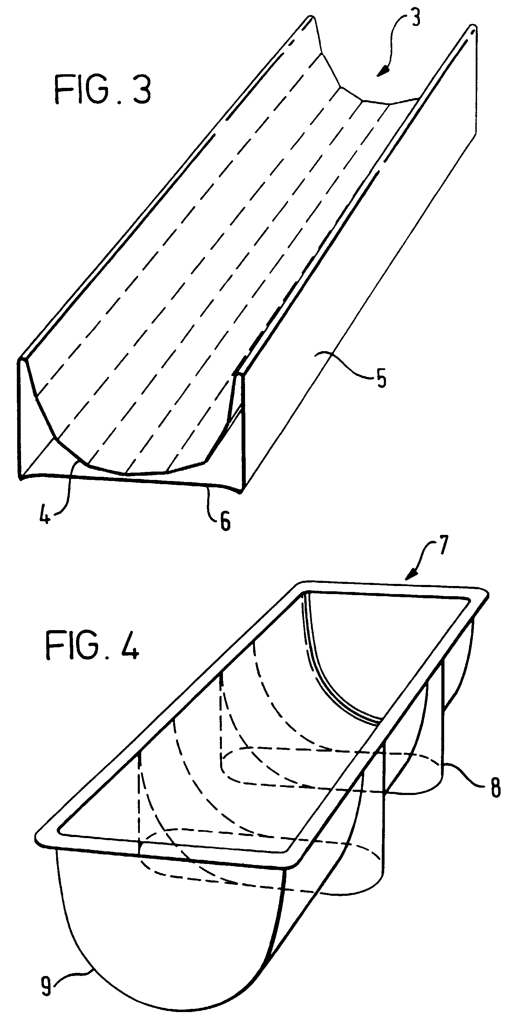

Fig. 3 zeigt ein Beispiel einer Einlage (3), deren Querschnitt die Form eines Halbkreises (4) hat. Das Rouladenbiscuit (2) von Fig. 2 wird auf diese Einlage plaziert. Damit die Einlage gut aufrecht bleibt, weist sie Stützen (5) und einen Boden (6). Diese Einlage ist aus beschichtetem Karton.

Die Einlage (7) von Fig. 4 ist aus Kunststoff und hat ebenfalls die Form eines halben Zylinders (9). Damit diese Einlage gut aufrecht bleibt, weist sie Stützfüsse (8).

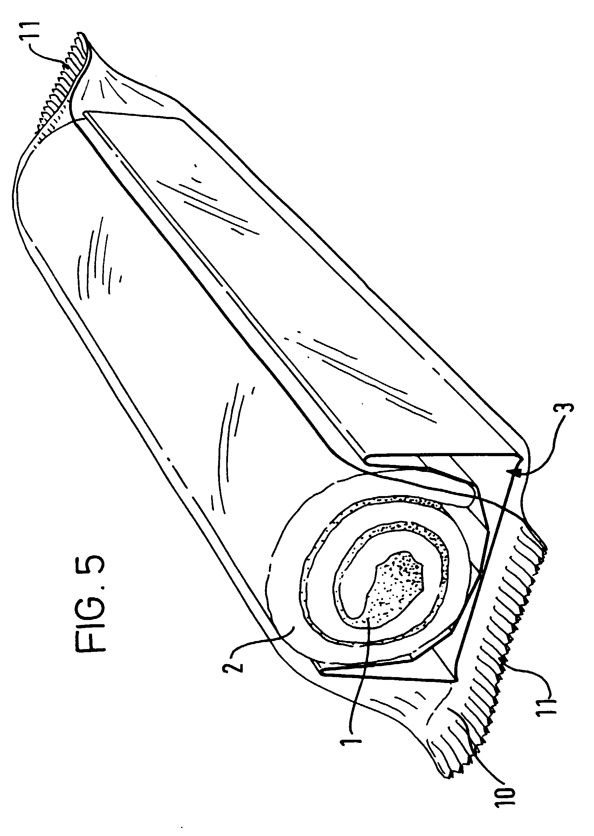

Fig. 5 zeigt das Rouladenbiscuit (2) fertig zum Verkaufen mit der Einlage (3) von Fig. 3 eine Schlauchbeutelverpackung (10) die auf beiden Enden in (11) gesiegelt wurde. Die Verpackung ist aus Papier und die Trennfolie (1) aus Backpapier.

Die Erfindung wird jetzt in Verbindung mit den Beispielen näher erläutert.

### Beispiel 1.

In einem Durchlaufmixer wird folgende Mischung aufgeschlagen:
- 20,3%: Wasser
- 24,0%: Zucker,
- 12%: konzentriertes Vollei,
- 2,4%: Stärke,
- 26,4%: Weissmehl,
- 1.0%: Eiereiweisspulver,
- 0,1%: Xanthan,
- 0,02%: Cystein-HCl,
- 0,36%: Backpulver,
- 1,4%: Emulgator, sowie 12% weitere Zutaten wie Salz, Sojamehl, Sorbitlösung, Glukosesirup und Aroma.

Die Mischung wird dann auf einem Backblech verteilt (Dicke des Bandes 9 mm), kontinuierlich in einem Ofen bei 240-270°C während 2 Min. 30 Sek. gebacken, einige Minuten bei Raumtemperatur gekühlt, auf die entsprechende Grösse geschnitten, mit einem Backpapier gerollt und verpackt in einer Verpackung mit geradem Boden.

Nach 3 wochen Lagerung bekommt man beim Abrollen eine durchschnittliche Anzahl von Risse zwischen 0,3 und 0,7 (es wurde mit 16 Muster gearbeitet).

Im Vergleich dazu mit einem Rouladenbiscuit nach Standardrezept (d.h. ohne Zugabe von Eiereiweisspulver, Xanthan und Cystein) hat man eine Anzahl von Risse zwischen 2,9 und 3,1.

### Beispiel 2.

Man arbeitet gemäss Beispiel 1 aber mit dem Zusatz von 0,007% Ascorbinsäure. Im Durchschnitt bekommt man die Gleiche Zahl der Risse wie oben.

### Beispiel 3.

Man arbeitet gemäss Beispiel 1 aber ohne Xanthan. Im Durchschnitt bekommt man eine Zahl von Rissen zwischen 0,7 und 1,1.

### Beispiel 4.

Man arbeitet gemäss Beispiel 1 aber mit einer Verpackung und Einlage gemäss Fig. 5. Nach 3 wochen Lagerung hat man zwischen 0,3 und 0,6 Rissen gemäss einem Versuch mit 16 Muster.

### Beispiel 5.

Man arbeitet gemäss Beispiel 1 aber ohne Eiereiweiss und Cystein. Im Durchschnitt bekommt man eine Zahl von Rissen zwischen 0,9 und 1,3.

## Patentansprüche

1. Gerolltes Rouladenbiscuit, hergestellt auf Basis einer Mischung von Mehl, Zucker, Vollei, Backpulver, Emulgator und Wasser, dadurch gekennzeichnet, dass im Teig zur Herstellung des Biscuits Cystein und Eiereiweiss zugesetzt werden.

2. Gerolltes Rouladenbiscuit gemäss Anspruch 1, dadurch gekennzeichnet, dass es zwischen 0,01 und 0,03% L-Cystein und zwischen 0,5 und 1,7% Eiereiweiss zugesetzt werden.

3. Gerolltes Rouladenbiscuit gemäss Ansprüchen 1 oder 2 dadurch gekennzeichnet, dass es ein Verdickungsmittel enthält.

4. Gerolltes Rouladenbiscuit gemäss Anspruch 3, dadurch gekennzeichnet, dass es als Verdickungemittel zwischen 0,05 und 0,17% Xanthan enthält.

5. Gerolltes Rouladenbiscuit gemäss Ansprüchen 1 bis 4, dadurch gekennzeichnet, dass es auf Basis von Weissmehl hergestellt wurde.

6. Gerolltes Rouladenbiscuit gemäss Ansprüchen 1 bis 5, dadurch gekennzeichnet, dass es zwischen 28 und 35% Mehl enthält.

7. Gerolltes Rouladenbiscuit gemäss Ansprüchen 1 bis 6, dadurch gekennzeichnet, dass es zwischen 22 und 28% Wasser enthält.

8. Gerolltes Rouladenbiscuit gemäss Ansprüchen 1 bis 7, dadurch gekennzeichnet, dass es zwischen 0,003 und 0,02% Ascorbinsäure enthält.

9. Gerolltes Rouladenbiscuit gemäss Ansprüchen 1 bis 8, dadurch gekennzeichnet, dass es zwischen 0,4 und 0,8% Alkohol enthält.

10. Gerolltes Rouladenbiscuit gemäss Ansprüchen 1 bis 9, dadurch gekennzeichnet dass es zu einem Zylinder aufgerollt wird und auf einer Seite des Biscuits ein Trennpapier oder Trennfolie aufweist.

11. Gerolltes Rouladenbiscuit gemäss Ansprüchen 1 bis 10, dadurch gekennzeichnet, dass es in einer Hülle aus Kunststoff oder aus beschichtetem Karton luft- und wasserdampfdicht verpackt ist.

12. Gerolltes Rouladenbiscuit gemäss Anspruch 11, dadurch gekennzeichnet, dass in der Hülle das Biscuit in einer Einlage, deren Querschnitt angenähert die Form eines Halbkreises hat, enthalten ist.

13. Gerolltes Rouladenbiscuit gemäss Anspruch 12, dadurch gekennzeichnet, dass die Einlage aus beschichtetem Karton besteht.

14. Gerolltes Rouladenbiscuit gemäss Ansprüchen 1 bis 15, dadurch gekennzeichnet, dass es eine Dicke zwischen 5 und 15 mm aufweist.

15. Teig zur Herstellung eines Rouladenbiscuits gemäss Ansprüche 1 bis 14, auf Basis von Mehl, Zucker, Vollei, Backpulver, Emulgator und Wasser, dadurch gekennzeichnet, dass er zusätzlich L-Cystein und Eiereiweiss enthält.

16. Teig gemäss Anspruch 15, dadurch gekennzeichnet, dass er zwischen 0,01 und 0,04% L-Cystein und zwischen 0,5 und 1,7% Eiereiweiss enthält.

17. Teig gemäss Ansprüche 15 oder 16, dadurch gekennzeichnet, dass er zwischen 15 und 25% Wasser und zwischen 22 und 30% Weissmehl enthält.

18. Teig gemäss Ansprüche 16 und 17, dadurch gekennzeichnet, dass er zwischen 0,04 und 0,15% Xanthan enthält.

19. Gerolltes Rouladenbiscuit, hergestellt auf Basis einer Mischung von Mehl, Zucker, Vollei, Backpulver, Emulgator und Wasser, dadurch gekennzeichnet, dass es ein Verdickungsmittel enthält.

20. Gerolltes Rouladenbiscuit gemäss Anspruch 19, dadurch gekennzeichnet dass es als Verdickungsmittel zwischen 0,05 und 0,17% Xanthan enthält.

## Claims

1. Swiss roll, prepared from a mixture of flour, sugar, whole egg, baking powder, emulsifier and water, characterised in that cysteine and egg albumen are added to the mixture for preparing the roll.

2. Swiss roll according to claim 1, characterised in that between 0.01 and 0.03% L-cysteine and between 0.5 and 1.7% egg albumen are added.

3. Swiss roll according to claim 1 or 2, characterised in that it contains a thickener.

4. Swiss roll according to claim 3, characterised in that it contains between 0.05 and 0.17% xanthan as thickener.

5. Swiss roll according to claims 1 to 4, characterised in that it has been prepared from white flour.

6. Swiss roll according to claims 1 to 5, characterised in that it contains between 28 and 35% flour.

7. Swiss roll according to claims 1 to 6, characterised in that it contains between 22 and 28% water.

8. Swiss roll according to claims 1 to 7, characterised in that it contains between 0.003 and 0.02% ascorbic acid.

9. Swiss roll according to claims 1 to 8, characterised in that it contains between 0.4 and 0.8% alcohol.

10. Swiss roll according to claims 1 to 9, characterised in that it is rolled up on a cylinder and that there is a release paper or separating foil on one side of the roll.

11. Swiss roll according to claims 1 to 10, characterised in that it is packaged in an airtight and waterproof wrapping made of plastics or of coated cardboard.

12. Swiss roll according to claim 11, characterised in that within the wrapping the roll is held in a support, the cross-section of which is approximately semicircular in shape.

13. Swiss roll according to claim 12, characterised in that the support is made of coated cardboard.

14. Swiss roll according to claims 1 to 15, characterised in that it is between 5 and 15 mm in thickness.

15. Mixture for preparing a Swiss roll according to claims 1 to 14, composed of flour, sugar, whole egg, baking powder, emulsifier and water, characterised in that it contains in addition L-cysteine and egg albumen.

16. Mixture according to claim 15, characterised in that it contains between 0.01 and 0.04% L-cysteine and between 0.5 and 1.7% egg albumen.

17. Mixture according to claim 15 or 16, characterised in that it contains between 15 and 25% water and between 22 and 30% white flour.

18. Mixture according to claims 16 and 17, characterised in that it contains between 0.04 and 0.15% xanthan.

19. Swiss roll, prepared from a mixture of flour, sugar, whole egg, baking powder, emulsifier and water, characterised in that it contains a thickener.

20. Swiss roll according to claim 19, characterised in that it contains between 0.05 and 0.17% xanthan as thickener.

## Revendications

1. Biscuit roulé pour roulades, préparé à base d'un mélange de farine, de sucre, d'oeufs entiers, de poudres à lever, d'émulsionnant et d'eau, caractérisé en ce que de la cystéine et de l'albumine d'oeuf sont ajoutées à la pâte de préparation du biscuit.

2. Biscuit roulé pour roulades suivant la revendication 1, caractérisé en ce qu'il est additionné de 0,01 à 0,03 % de L-cystéine et de 0,5 à 1,7 % d'albumine d'oeuf.

3. Biscuit roulé pour roulades suivant la revendication 1 ou 2, caractérisé en ce qu'il contient un épaississant.

4. Biscuit roulé pour roulades suivant la revendication 3, caractérisé en ce qu'il contient comme épaississant entre 0,05 et 0,17 % de xanthane.

5. Biscuit roulé pour roulades suivant les revendications 1 à 4, caractérisé en ce qu'il a été préparé à base de farine blanche.

6. Biscuit roulé pour roulades suivant les revendications 1 à 5, caractérisé en ce qu'il contient entre 28 et 35 % de farine.

7. Biscuit roulé pour roulades suivant les revendications 1 à 6, caractérisé en ce qu'il contient entre 22 et 28 % d'eau.

8. Biscuit roulé pour roulades suivant les revendications 1 à 7, caractérisé en ce qu'il contient entre 0,003 et 0,02 % d'acide ascorbique.

9. Biscuit roulé pour roulades suivant les revendications 1 à 8, caractérisé en ce qu'il contient entre 0,4 et 0,8 % d'alcool.

10. Biscuit roulé pour roulades suivant les revendications 1 à 9, caractérisé en ce qu'il est enroulé en un cylindre et présente sur un de ses côtés un papier de séparation ou une feuille de séparation.

11. Biscuit roulé pour roulades suivant les revendications 1 à 10, caractérisé en ce qu'il est emballé de façon étanche à l'air et à la vapeur d'eau dans une enveloppe en matière plastique ou en carton couché.

12. Biscuit roulé pour roulades suivant la revendication 11, caractérisé en ce qu'il est contenu dans l'enveloppe dans une garniture dont la section transversale a approximativement la forme d'un demi-cercle.

13. Biscuit roulé pour roulades suivant la revendication 12, caractérisé en ce que la garniture est en carton couché.

14. Biscuit roulé pour roulades suivant les revendications 1 à 15, caractérisé en ce qu'il présente une épaisseur de 5 à 15 mm.

15. Pâte pour la préparation d'un biscuit pour roulades suivant les revendications 1 à 14, à base de farine, de sucre, d'oeufs entiers, de poudres à lever, d'émulsionnant et d'eau, caractérisée en ce qu'elle contient en outre de la L-cystéine et de l'albumine d'oeuf.

16. Pâte suivant la revendication 15, caractérisée en ce qu'elle contient entre 0,01 et 0,04 % de L-cystéine et entre 0,5 et 1,7 % d'albumine d'oeuf.

17. Pâte suivant les revendications 15 ou 16, caractérisée en ce qu'elle contient entre 15 et 25 % d'eau et entre 22 et 30 % de farine blanche.

18. Pâte suivant les revendications 16 et 17, caractérisée en ce qu'elle contient entre 0,04 et 0,15 % de xanthane.

19. Biscuit roulé pour roulades, préparé à base d'un mélange de farine, de sucre, d'oeufs entiers, de poudres à lever, d'émulsionnant et d'eau, caractérisé en ce qu'il contient un épaississant.

20. Biscuit roulé pour roulades suivant la revendication 19, caractérisé en ce qu'il contient un épaississant entre 0,05 et 0,17 % de xanthane.
